# EUROPEAN PATENT APPLICATION

(11) **EP 2 464 047 A1**
(43) Date of publication of application: **13.06.2012**
(21) Application number: 10805976.7
(22) Date of filing: 24.05.2010
(51) Int. Cl.: H04L 1/12

(54) **METHOD AND SYSTEM FOR INSTRUCTING ENABLING/DISABLING FROWARD ERROR CORRECTION CODING FUNCTION**

(30) Priority: 05.08.2009 CN 200910090342
(71) Applicant: ZTE Corporation, Shenzhen, Guangdong 518057 (CN)
(72) Inventor: ZHANG, Dezhi, Shenzhen Guangdong 518057 (CN); ZHANG, Weiliang, Shenzhen Guangdong 518057 (CN); YUAN, Liquan, Shenzhen Guangdong 518057 (CN)
(74) Representative: Hannke, Christian
(86) International application number: PCT/CN2010/073176
(87) International publication number: WO 2011/015072

(57) **Abstract**

The present invention discloses a method for instructing enabling/disabling Forward Error Correction (FEC) function. The method comprises: presetting an instruction identifier of an FEC status; transmitting an instruction identifier of an FEC status of an Optical Network Unit (ONU) and the Identity (ID) of the ONU by an Optical Line Terminal (OLT), wherein the instruction identifier of the FEC status of the ONU is corresponding to the ID of the ONU; and enabling or disabling its own FEC function by the ONU according to the received instruction identifier corresponding to its own ID. The present invention also discloses a system for instructing enabling/disabling FEC function, which comprises an OLT and an ONU. The method and system of the present invention can solve the problem that the ONU cannot determine the instruction from the OLT due to an error code.

## Description

### Technical field

The present invention relates to Passive Optical Network (PON) technology, in particular to a method and a system for instructing enabling/disabling Forward Error correction (FEC) function.

### Background

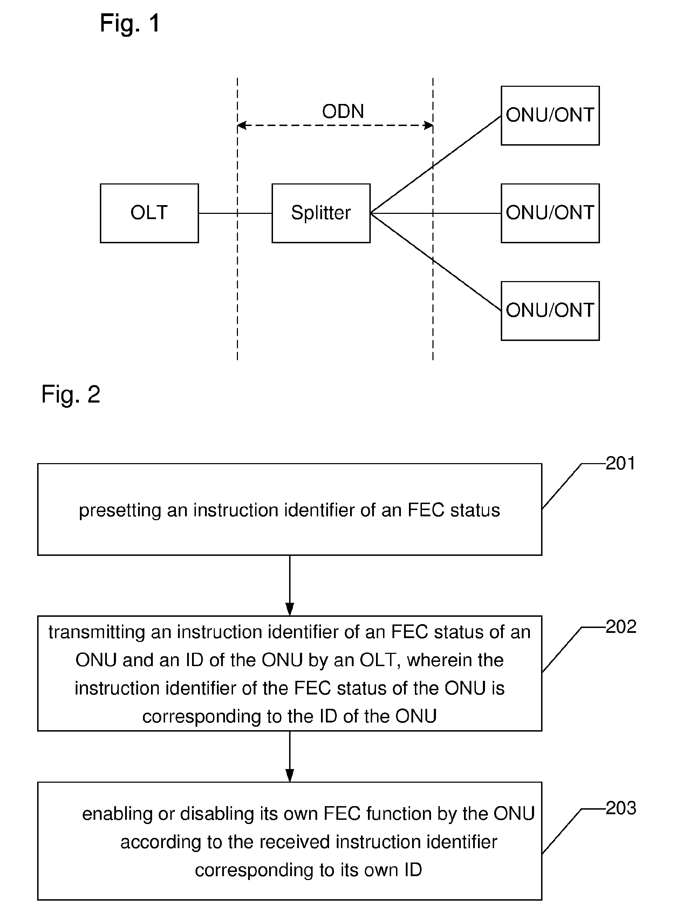

The PON technology is classified as a point to multi-point optical access technology. As is shown in Fig. 1, the network architecture of the PON comprises an Optical Line Terminal (OLT), an Optical Distribution Network (ODN), and Optical Network Units (ONUs)/Optical Network Terminals (ONTs), wherein the OLT is connected with the ONUs through the ODN.

In line transmission of the PON, a high bit error ratio causes that service can not be carried out normally. For example, in uplink transmission, when the bit error ratio is higher than the magnitude of 10⁻³, the service can not be carried out normally. Therefore, the FEC technology is adopted in the PON to prevent errors generated possibly during the transmission and reduce the bit error ratio, and generally, the bit error ratio is controlled to be within the magnitudes of 10⁻¹⁰ to 10⁻¹². In the PON, the OLT is used for instructing an ONU to enable or disable the FEC function of the ONU, and the specific instructing method is as follows: after the OLT determines an FEC status of the ONU, namely the status is enabled or disabled, the value of a ninth Bit of the Flag field in an Allocation Structure of a downlink frame is set to be 1 or 0, so as to instruct the ONU to enable or disable the FEC function during uplink transmission. When the value is set to be 1, enabling the FEC function is instructed, and when the value is set to be 0, disabling the FEC function is instructed.

In the PON, one ONU may use a plurality of T-CONTs (T-CONT, Transmission Container), and one Allocation Structure corresponds to one T-CONT in the ONU. Therefore, in the above-mentioned method, when the OLT instructs the ONU to enable or disable the FEC function, all that is needed is to set all the ninth Bits of the Flags in the Allocation Structures corresponding to the T-CONTs used by the ONU to be 1 or 0, namely, the OLT identically instructs all the T-CONTs used by the ONU in a downlink frame, therefore, the FEC functions are completely enabled or disabled. In case that an value of an ninth Bit of an Flag field in a downlink frame is an error code due to a reason of the OLT or the line, after the ONU receives the downlink frame, instructions corresponding to the T-CONTs used by the ONU is detected to be not identical in the downlink frame, so that the ONU does not know whether the OLT instructs it to enable the FEC function or disable the FEC function during uplink transmission, furthermore, operation of enabling or disabling the FEC function, which is carried out by the ONU, does not conform to the instruction of the OLT, so that the uplink transmission is influenced. Particularly, in the case that the OLT instructs the ONU to enable the FEC function, but the ONU disables the FEC function, thus over high bit error rate can be caused, and the service can not be carried out normally.

### Summary

On that account, the present invention mainly aims to provide a method and a system for instructing enabling/disabling forward error correction function, and solve the problem that the ONU can not determine the instruction from the OLT due to an error code.

In order to achieve the above mentioned purpose, the technical solution of the present invention is realized in the way as follows.

A method for instructing enabling/disabling FEC function comprises: setting an instruction identifier of an FEC status, and further comprises:
transmitting an instruction identifier of an FEC status of an ONU and an ID of the ONU by an OLT, wherein the instruction identifier of the FEC status of the ONU is corresponding to the ID of the ONU; and
enabling or disabling its own FEC function by the ONU according to the received instruction identifier corresponding to its own ID.

Further, the operation that the OLT transmits the instruction identifier of the FEC status of the ONU and the ID of the ONU may be:
querying an allocation structure with its Alloc-ID equal to the ID of the ONU in all allocation structures in a downlink frame, and
setting a value of a ninth Bit of a Flag field in the queried allocation structure to be the instruction identifier of the FEC status of the ONU, of which the ID is equal to the Alloc-ID of the allocation structure, and then transmitting the downlink frame.

Further, the operation that the OLT transmits the instruction identifier of the FEC status of the ONU and the ID of the ONU may be:
setting a PLOAM message which is taken as an FEC instruction message, adding an FEC instruction message identifier in the FEC instruction message, and adding the instruction identifier of the FEC status of the ONU and the ID of the ONU correspondingly in the FEC instruction message ;
adding the FEC instruction message by the OLT in a PLOAM field of a downlink frame, and transmitting the downlink frame; or
adding the instruction identifier for the FEC status of the ONU and the ID of the ONU correspondingly in idle Bits in a PLOAM message, adding the PLOAM message in a PLOAM field of a downlink frame, and transmitting the downlink frame.

Further, the operation that the OLT transmits the instruction identifier of the FEC status of the ONU and the ID of the ONU may be:
adding an FEC status attribute of the ONU in an OMCI message;
setting a value of the FEC status attribute of the ONU in the OMCI message to be the instruction identifier of the FEC status of the ONU, adding the OMCI message in an OMCI field in a downlink frame, and transmitting the downlink frame.

Further, the operation that the OLT transmits the instruction identifier of the FEC status of the ONU and the ID of the ONU may be:
adding an FEC instruction field in a PCBd, mapping the ID of the ONU to a sequence number of a Bit of the FEC instruction field; and
adding the instruction identifier of the FEC status of the ONU by the OLT in a Bit with the sequence number equal to the ID of the ONU in the FEC instruction field, and broadcasting it.

The method may further comprise: replying by the ONU to the OLT about a state of executing FEC instruction transmitted by the OLT, and the details are as follows:
carrying an instruction identifier of current FEC status in a first sent uplink frame by the ONU, after the FEC function is enabled or disabled; or
defining a reporting bit for the FEC status in a frame head of an uplink frame, when the uplink frame is transmitted, setting a value of the reporting bit for the FEC status in the uplink frame by the ONU to be the instruction identifier of the current FEC status of the ONU.

The invention further provides a system for instructing enabling/disabling FEC function, and the system comprises an OLT and an ONU, wherein
the OLT is used for setting an instruction identifier of an FEC status, and transmitting an instruction identifier of FEC status of the ONU and an ID of the ONU, wherein the instruction identifier of the FEC status of the ONU is corresponding to the ID of the ONU; and
the ONU is used for enabling or disabling its own FEC function according to the received instruction identifier corresponding to its own ID.

Further, the OLT may comprise an identifier setting module, a status determining module and a transmission module, wherein
the identifier setting module is used for setting the instruction identifier of the FEC status;
the status determining module is used for determining the FEC status of the ONU; and
the transmission module is used for transmitting the instruction identifier of the FEC status of the ONU and the ID of the ONU, wherein the instruction identifier of the FEC status of the ONU is corresponding to the ID of the ONU.

Further, the transmission module may comprise a query module and a first setting module, wherein
the query module is used for querying an allocation structure with its Alloc-ID equal to the ID of the ONU in all allocation structures in a downlink frame; and
the first setting module is used for setting a value of a ninth Bit of a Flag field in the queried allocation structure to be the instruction identifier of the FEC status of the ONU, of which the ID is equal to the Alloc-ID of the allocation structure, and then transmitting the downlink frame.

Further, the transmission module may comprise a first adding module and a first transmission module, wherein
the first adding module is used for setting a PLOAM message which is taken as an FEC instruction message, adding an FEC instruction message identifier in the FEC instruction message, and adding the instruction identifier of the FEC status of the ONU and the ID of the ONU correspondingly, and then transmitting the FEC instruction message to the first transmission module; and
the first transmission module is used for adding the FEC instruction message transmitted by the first adding module in a PLOAM field in a downlink frame, and then transmitting the downlink frame.

Further, the transmission module may comprise a second adding module and a second transmission module, wherein
the second adding module is used for adding the instruction identifier of the FEC status of the ONU and the ID of the ONU correspondingly in idle Bits in a PLOAM message, and then transmitting the PLOAM message to the second transmission module; and
the second transmission module is used for adding the PLOAM message transmitted by the second adding module in a PLOAM field of a downlink frame, and transmitting the downlink frame.

Further, the transmission module may comprise an attribute setting module and a second setting module, wherein
the attribute setting module is used for adding an FEC status attribute of the ONU in an OMCI message; and
the second setting module is used for setting a value of the FEC status attribute of the ONU in the OMCI message to be the instruction identifier of the FEC status of the ONU, adding the OMCI message in an OMCI field in a downlink frame, and transmitting the downlink frame.

Further, the transmission module may comprise a field setting module and a third adding module, wherein
the field setting module is used for adding an FEC instruction field in a PCBd, and mapping the ID of the ONU to a sequence number of a Bit of the FEC instruction field; and
the third adding module is used for adding the instruction identifier of the FEC status of the ONU into the Bit with the sequence number equal to the ID of the ONU in the FEC instruction field, and broadcasting it.

Further, the ONU may comprise:
an enabling/disabling module, used for enabling/disabling the FEC function of the ONU according to the received instruction identifier corresponding to the ID of the ONU;
the ONU may further comprise:
   an answering module, used for carrying an instruction identifier of current FEC status of the ONU in a first sent uplink frame after the FEC function is enabled or disabled, or defining a reporting bit for the FEC status in a frame head of an uplink frame and, when the uplink frame is transmitted, setting a value of the reporting bit for the FEC status in the uplink frame to be the instruction identifier of the current FEC status of the ONU.

The method and the system for instructing enabling/disabling FEC function provided in the present invention involve that the OLT transmits the instruction identifier of the FEC status of the ONU and the ID of the ONU, wherein the instruction identifier of the FEC status of the ONU corresponds to the ID of the ONU, which enables to accomplish one-time instruction for the FEC status of the ONU by only transmitting one instruction identifier corresponding to the ID of the ONU, so as to solve the problem that the ONU can not determine whether the OLT instructs it to enable or disable the FEC function during the uplink transmission in the case that the instruction identifiers for the T-CONTs are not identical when the instruction identifiers are transmitted respectively to the T-CONTs of the ONU.

### Brief description of the drawings

Fig. 1 shows a block diagram of the network architecture of the PON;
Fig. 2 shows a flow diagram of a method for instructing enabling/disabling FEC function in the embodiment 1 of the present invention;
Fig. 3 shows a block diagram of a PCBd in which an FEC instruction field is added according to the embodiment 1 of the present invention;
Fig. 4 shows a block diagram of a system for instructing enabling/disabling FEC function in the embodiment 2 of the present invention;
Fig. 5 shows a block diagram of a system for instructing enabling/disabling FEC function in the embodiment 3 of the present invention;
Fig. 6 shows a block diagram of a system for instructing enabling/disabling FEC function in the embodiment 4 of the present invention;
Fig. 7 shows a block diagram of a system for instructing enabling/disabling FEC function in the embodiment 5 of the present invention;
Fig. 8 shows a block diagram of a system for instructing enabling/disabling FEC function in the embodiment 6 of the present invention.

### Detailed description

A realization process of the method for instructing enabling/disabling FEC function in the embodiment 1 of the present invention is shown in Fig. 2, and the method comprises steps 201-203.

201: presetting an instruction identifier of an FEC status.

The instruction identifier may be set to be one or more Bits, for example, the instruction identifier of enabling the FEC function is set to be 1, and the instruction identifier of disabling the FEC function is set to be 0; or the instruction identifier of enabling the FEC function is set to be 0101, and the instruction identifier of disabling the FEC function is set to be 1010. When the instruction identifier is set to be more than one Bits, an ONU determines the instruction of an OLT according to a matching degree which is obtained by the ONU matching a received instruction identifier with the set instruction identifier, and so as to avoid the problem that the ONU can not determine the real instruction of the OLT when all or part of the Bits of the received instruction identifiers are error code.

202: transmitting an instruction identifier of an FEC status of an ONU and an ID of the ONU by an OLT, wherein the FEC status of the ONU is determined by the OLT, and the instruction identifier of the FEC status of the ONU is corresponding to the ID of the ONU.

The FEC status of each ONU is determined by the OLT; the correspondence refers to the corresponding relationship between the instruction identifier of the FEC status of the ONU and the ID of the ONU. The OLT transmits the corresponding relationship so that the ONU can find the instruction identifier of the FEC status, which is transmitted to its own by the OLT, according to its own ID, namely, the ID of the ONU is used for associating the ONU with instruction identifier of the FEC status of the ONU determined by the OLT, and the ID of the ONU may be replaced by other parameters which can indicate the ONU uniquely.

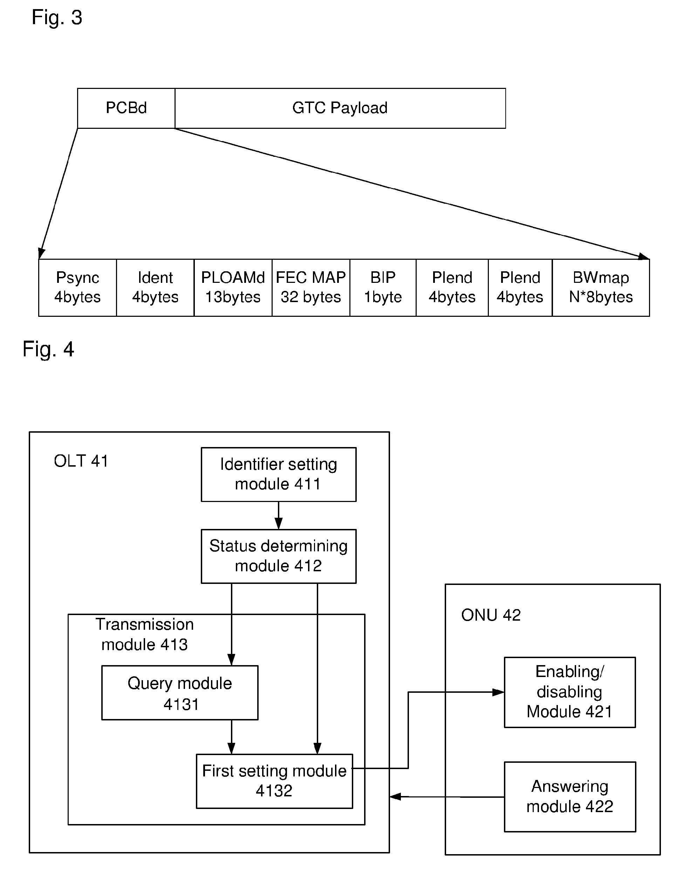

Herein, the operation that the OLT transmits the instruction identifier and the ID of the ONU may be in the following way:
Step a1: querying an allocation structure with its Alloc-ID equal to the ID of the ONU in all allocation structures in a downlink frame;
   wherein each ONU has a T-CONT which pertains to itself uniquely, and the Alloc-ID of the allocation structure corresponding to the T-CONT is equal to the own ID of the ONU; and herein, for an allocation structure, of which the Alloc-ID is not equal to the ID of the ONU, the value of the ninth Bit of the Flag field is no longer used for instructing the FEC status;
Step b1: setting a value of a ninth Bit of a Flag field in the queried allocation structure to be the instruction identifier of the FEC status of the ONU, of which the ID equal to the Alloc-ID of the allocation structure, and transmitting the downlink frame.
   The operation that the OLT transmits the instruction identifier and the ID of the ONU may be also in the following way:
Step a2: after the FEC status of the ONU is determined by the OLT, setting a PLOAM message which is taken as an FEC instruction message, adding an FEC instruction message identifier in the FEC instruction message, and adding the instruction identifier of the FEC status of the ONU and the ID of the ONU correspondingly in the FEC instruction message;
Step b2: adding the FEC instruction message by the OLT in a PLOAM field of a downlink frame, and transmitting the downlink frame;
   wherein in order to ensure that the ONU can gain the FEC instruction message, the FEC instruction message can be sent repeatedly.
   The operation that the OLT transmits the instruction identifier and the ID of the ONU may be also in the following way:
Step a3: after the FEC status of the ONU is determined by the OLT, adding the instruction identifier of the FEC status of the ONU and the ID of the ONU correspondingly in idle Bits in a PLOAM message;
   wherein the idle Bits in the PLOAM message refer to remaining Bits excluding Bits which are defined and used for sending the PLOAM massage;
Step b3: adding the PLOAM massage in a PLOAM field of a downlink frame, and transmitting the downlink frame.
   The operation that the OLT transmits the instruction identifier and the ID of the ONU may be also in the following way:
Step a4: adding an FEC status attribute of the ONU in an OMCI (ONT Management and Control Interface) message; wherein the OMCI message refers to an ONT2-G ME message for bearing attributes of all management entities including the ONU;
Step b4: after the FEC status of the ONU is determined by the OLT, setting a value of the FEC status attribute of the ONU in the OMCI message to be the instruction identifier of the FEC status of the ONU, adding the OMCI message in an OMCI field in a downlink frame, and transmitting the downlink frame.
   The operation that the OLT transmits the instruction identifier and the ID of the ONU may be also in the following way:
Step a5: as shown in Fig. 3, adding an FEC instruction field in a PCBd, and mapping the ID of the ONU to a sequence number of a Bit of the FEC instruction field; wherein the number of the Bits included in the FEC instruction field may be 64, 128, 256 or 512 and the like, depending on the maximum number of the ONUs supported by a PON, and the sequence number start from 0 and end to 63, 127, 255 or 511 and the like;
Step b5: adding the instruction identifier of the FEC status of the ONU by the OLT in a Bit with the sequence number equal to the ID of the ONU in the FEC instruction field, and broadcasting it. For example, the instruction identifier of the FEC status of an ONU with the ID of 23 is added in the Bit with the sequence number of 23 in the FEC instruction field.

203: enabling or disabling its own FEC function by the ONU according to the received instruction identifier corresponding to its own ID.

Herein, the operation that the ONU enables or disables its own FEC function according to the received instruction identifier corresponding to its own ID, is in detail as follows:
parsing received downlink frame, and obtaining the instruction identifier corresponding to its own ID in the downlink frame by the ONU; and
enabling or disabling its own FEC function according to the obtained instruction identifier.

After Step 203, the embodiment 1 of the present invention further comprises: replying by the ONU to the OLT about a state of executing FEC instruction transmitted by the OLT, and the details are as follows:
carrying an instruction identifier of current FEC status in a first sent uplink frame by the ONU, after the FEC function is enabled or disabled; or
defining a reporting bit for the FEC status in a frame head of an uplink frame, when the uplink frame is transmitted, setting a value of the reporting bit for the FEC status in the uplink frame by the ONU to be the instruction identifier of the current FEC status of the ONU.

A system for instructing enabling/disabling FEC function in the embodiment 2 of the present invention is shown in Fig. 4, and comprises an OLT 41 and an ONU 42, wherein
the OLT 41 is used for setting an instruction identifier of an FEC status, and transmitting an instruction identifier of FEC status of the ONU 42 and an ID of the ONU 42, wherein the instruction identifier of the FEC status of the ONU 42 is corresponding to the ID of the ONU 42; and
the ONU 42 is used for enabling or disabling its own FEC function according to the received instruction identifier corresponding to its own ID.

The OLT 41 comprises an identifier setting module 411, a status determining module 412 and a transmission module 413, wherein
the identifier setting module 411 is used for setting the instruction identifier of the FEC status;
the status determining module 412 is used for determining the FEC status of the ONU 42; and
the transmission module 413 is used for transmitting the instruction identifier of the FEC status of the ONU 42 and the ID of the ONU 42, wherein the instruction identifier of the FEC status of the ONU 42 is corresponding to the ID of the ONU 42, and the FEC status of the ONU 42 is determined by the status determining module 412.

Further, the transmission module 413 comprises a query module 4131 and a first setting module 4132, wherein
the query module 4131 is used for querying an allocation structure with its Alloc-ID equal to the ID of the ONU 42 in all allocation structures in a downlink frame; and
the first setting module 4132 is used for setting a value of a ninth Bit of a Flag field in the queried allocation structure to be the instruction identifier of the FEC status of the ONU 42, of which the ID is equal to the Alloc-ID of the allocation structure, and then transmitting the downlink frame. The FEC status of the ONU 42 is determined by the status determining module.

Further, the ONU 42 comprises:
an enabling/disabling module 421, used for enabling/disabling the FEC function of the ONU 42 according to the received instruction identifier corresponding to the ID of the ONU 42.

The ONU 42 further comprises:
an answering module 422, used for carrying an instruction identifier of current FEC status of the ONU 42 in a first sent uplink frame after the FEC function is enabled or disabled, or defining a reporting bit for the FEC status in a frame head of an uplink frame, and when the uplink frame is transmitted, setting a value of the reporting bit for the FEC status in the uplink frame to be the instruction identifier of the current FEC status of the ONU 42.

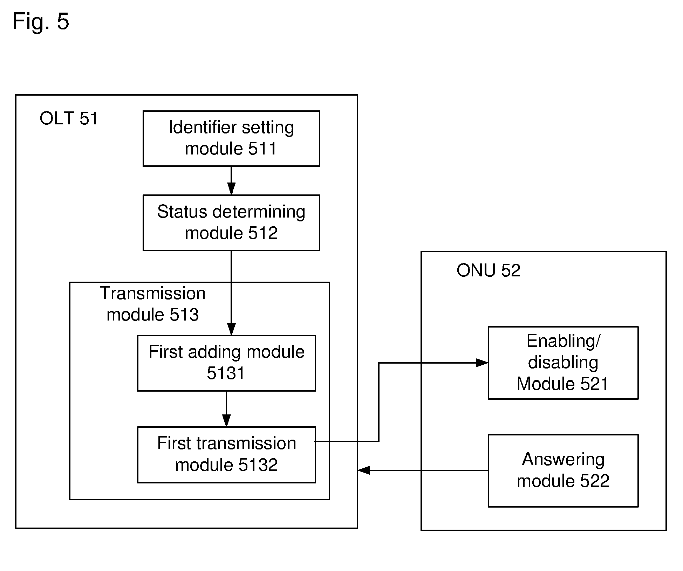

A system for instructing enabling/disabling FEC function in the embodiment 3 of the present invention is shown in Fig. 5, and comprises an OLT 51 and an ONU 52, wherein
the OLT 51 is used for setting an instruction identifier of FEC status, and transmitting an instruction identifier of FEC status of the ONU 52 and an ID of the ONU 52, wherein the instruction identifier of the FEC status of the ONU 52 is corresponding to the ID of the ONU 52, and the FEC status of the ONU 52 is determined by the OLT 51; and
the ONU 52 is used for enabling or disabling its own FEC function according to the received instruction identifier corresponding to its own ID.
The OLT 51 comprises an identifier setting module 511, a status determining module 512 and a transmission module 513, wherein
the identifier setting module 511 is used for setting the instruction identifier of the FEC status;
the status determining module 512 is used for determining the FEC status of the ONU 512; and
the transmission module 513 is used for transmitting the instruction identifier of FEC status of the ONU 52 and the ID of the ONU 52, wherein the instruction identifier of FEC status of the ONU 52 is corresponding to the ID of the ONU 52, and the FEC status of the ONU 52 is determined by the status determining module 512.

Further, the transmission module 513 comprises a first adding module 5131 and a first transmission module 5132, wherein
the first adding module 5131 is used for setting a PLOAM message which is taken as an FEC instruction message, adding an FEC instruction message identifier in the FEC instruction message, and adding the instruction identifier of the FEC status of the ONU 52 and the ID of the ONU 52 correspondingly, and then transmitting the FEC instruction message to the first transmission module 5132; and
the first transmission module 5132 is used for adding the FEC instruction message transmitted by the first adding module 5131 in a PLOAM field of a downlink frame, and then transmitting the downlink frame.

Further, the ONU 52 comprises:
an enabling/disabling module 521, used for enabling/disabling the FEC function of the ONU 52 according to the received instruction identifier corresponding to the ID of the ONU 52.

The ONU 52 further comprises:
an answering module 522, used for carrying an instruction identifier of current FEC status of the ONU 52 in a first sent uplink frame after the FEC function is enabled or disabled, or defining a reporting bit for the FEC status in a frame head of an uplink frame, and when the uplink frame is transmitted, setting a value of the reporting bit for the FEC status in the uplink frame to be the instruction identifier of the current FEC status of the ONU 52.

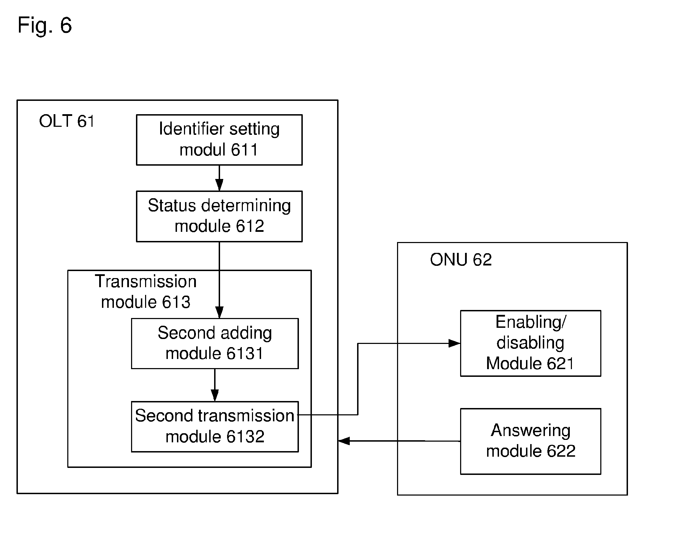

A system for instructing enabling/disabling FEC function in the embodiment 4 of the present invention is shown in Fig. 6, and comprises an OLT 61 and an ONU 62, wherein
the OLT 61 is used for setting an instruction identifier of FEC status, and transmitting an instruction identifier of FEC status of the ONU 42 and an ID of the ONU 62, wherein the instruction identifier of the FEC status of the ONU 62 is corresponding to the ID of the ONU 62, and the FEC status of the ONU 62 is determined by the OLT 61; and
the ONU 62 is used for enabling or disabling its own FEC function according to the received instruction identifier corresponding to its own ID.

The OLT 61 comprises an identifier setting module 611, a status determining module 612 and a transmission module 613, wherein
the identifier setting module 611 is used for setting the instruction identifier of the FEC status;
the status determining module 612 is used for determining the FEC status of the ONU 62; and
the transmission module 613 is used for transmitting the instruction identifier of FEC status of the ONU 62 and the ID of the ONU 62, wherein the instruction identifier of the FEC status of the ONU 62 is corresponding to the ID of the ONU 62, and the FEC status of the ONU 62 is determined by the status determining module 612.

Further, the transmission module 613 comprises a second adding module 6131 and a second transmission module 6132, wherein
the second adding module 6131 is used for adding the instruction identifier of the FEC status of the ONU 62 and the ID of the ONU 62 correspondingly in idle Bits in a PLOAM message, and then transmitting the PLOAM message to the second transmission module 6132; and
the second transmission module 6132 is used for adding the PLOAM message transmitted by the second adding module 6131 in a PLOAM field of a downlink frame, and transmitting the downlink frame.

Further, the ONU 62 comprises:
the enabling/disabling module 621, used for enabling/disabling the FEC function of the ONU 62 according to the received instruction identifier corresponding to the ID of the ONU 62.

The ONU 62 further comprises:
an answering module 622, used for carrying an instruction identifier of current FEC status of the ONU 62 in a first sent uplink frame after the FEC function is enabled or disabled, or defining a reporting bit for the FEC status in a frame head of an uplink frame, and when the uplink frame is transmitted, setting a value of the reporting bit for the FEC status in the uplink frame to be the instruction identifier of the current FEC status of the ONU 62.

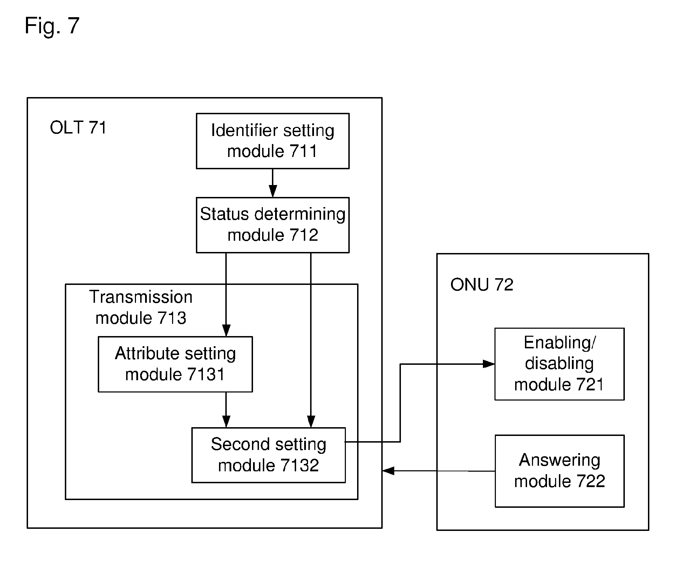

A system for instructing enabling/disabling FEC function in the embodiment 5 of the present invention is shown in Fig. 7, and comprises an OLT 71 and an ONU 72, wherein
the OLT 71 is used for setting an instruction identifier of FEC status, and transmitting an instruction identifier of FEC status of the ONU 72 and an ID of the ONU 71, wherein the FEC status of the ONU 72 is determined by the OLT 71, and the instruction identifier of FEC status of the ONU 72 is corresponding to the ID of the ONU 72; and
the ONU 72 is used for enabling or disabling its own FEC function according to the received instruction identifier corresponding to its own ID.

The OLT 71 comprises an identifier setting module 711, a status determining module 712 and a transmission module 713, wherein
the identifier setting module 711 is used for setting the instruction identifier of the FEC status;
the status determining module 712 is used for determining the FEC status of the ONU 72; and
the transmission module 713 is used for transmitting the instruction identifier of FEC status of the ONU 72 and the ID of the ONU 72, wherein the instruction identifier of the FEC status of the ONU 72 is corresponding to the ID of the ONU 72, and the FEC status of the ONU 72 is determined by the status determining module 712.

Further, the transmission module 713 comprises an attribute setting module 7131 and a second setting module 7132, wherein
the attribute setting module 7131 is used for adding an FEC status attribute of the ONU 72 in an OMCI message; and
the second setting module 7132 is used for setting a value of the FEC status attribute of the ONU 72 in the OMCI message to be the instruction identifier of the FEC status of the ONU 72, adding the OMCI message in an OMCI field in a downlink frame, and transmitting the downlink frame.

Further, the ONU 72 comprises:
an enabling/disabling module 721, used for enabling/disabling the FEC function of the ONU 72 according to the received instruction identifier corresponding to the ID of the ONU 72.

The ONU 72 further comprises:
an answering module 722, used for carrying an instruction identifier of current FEC status of the ONU 72 in a first sent uplink frame after the FEC function is enabled or disabled, or defining a reporting bit for the FEC status in a frame head of an uplink frame, and when the uplink frame is transmitted, setting a value of the reporting bit for the FEC status in the uplink frame to be the instruction identifier of the current FEC status of the ONU 72.

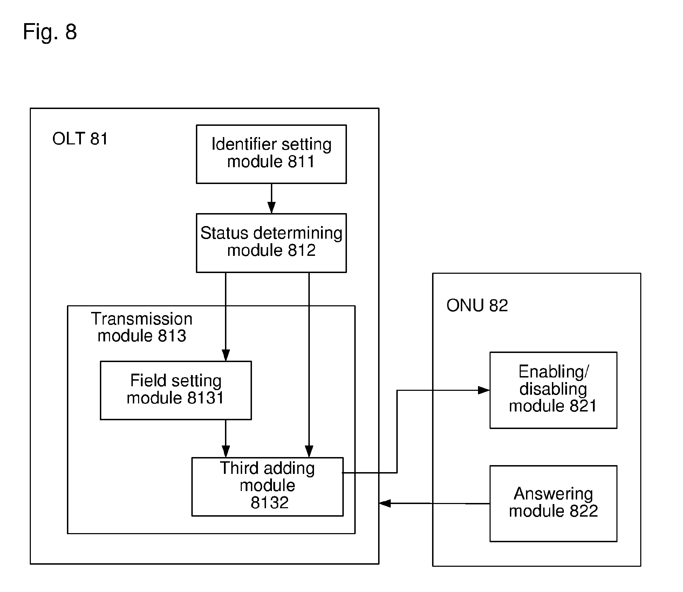

A system for instructing enabling/disabling FEC function in the embodiment 6 of the present invention is shown in Fig. 8, and comprises an OLT 81 and an ONU 82, wherein
the OLT 81 is used for setting an instruction identifier of FEC status, and transmitting an instruction identifier of FEC status of the ONU 82 and an ID of the ONU 82, wherein the FEC status of the ONU 82 is determined by the OLT 81, and the instruction identifier of FEC status of the ONU 82 is corresponding to the ID of the ONU 82; and
the ONU 82 is used for enabling or disabling its own FEC function according to the received instruction identifier corresponding to its own ID.

The OLT 81 comprises an identifier setting module 811, a status determining module 812 and a transmission module 813, wherein
the identifier setting module 811 is used for setting the instruction identifier of the FEC status;
the status determining module 812 is used for determining the FEC status of the ONU 82; and
the transmission module 813 is used for transmitting the instruction identifier of FEC status of the ONU 82 and the ID of the ONU 82, wherein the instruction identifier of the FEC status of the ONU 82 is corresponding to the ID of the ONU 82, and the FEC status of the ONU 82 is determined by the status determining module 812.

Further, the transmission module 813 comprises a field setting module 8131 and a third adding module 8132, wherein
the field setting module 8131 is used for adding an FEC instruction field in a PCBd, and mapping the ID of the ONU 82 to a sequence number of a Bit of the FEC instruction field; and
the third adding module 8132 is used for adding the instruction identifier of the FEC status of the ONU 82 in the Bit with the sequence number equal to the ID of the ONU 82 in the FEC instruction field, and broadcasting it.

Further, the ONU 82 comprises:
an enabling/disabling module 821, used for enabling/disabling the FEC function of the ONU 82 according to the received instruction identifier corresponding to the ID of the ONU 82.

The ONU 82 further comprises:
an answering module 822, used for carrying an instruction identifier of current FEC status of the ONU 82 in a first sent uplink frame after the FEC function is enabled or disabled, or defining a reporting bit for the FEC status in a frame head of an uplink frame, and when the uplink frame is transmitted, setting a value of the reporting bit for the FEC status in the uplink frame to be the instruction identifier of the current FEC status of its own ONU 82.

The method and system of the present invention is also applied to a situation that an OLT instructs an ONT to enable or disable its FEC function.

The above is only the preferred embodiment of the present invention and not intended to limit the scope of protection of the present invention.

## Claims

1. A method for instructing enabling/disabling FEC function, comprising:
setting an instruction identifier of an FEC status;
further comprising:
transmitting an instruction identifier of an FEC status of an ONU and an ID of the ONU by an OLT, wherein the instruction identifier of the FEC status of the ONU is corresponding to the ID of the ONU; and
enabling or disabling its own FEC function by the ONU according to the received instruction identifier corresponding to its own ID.

2. The method according to claim 1, wherein the operation that the OLT transmits the instruction identifier of the FEC status of the ONU and the ID of the ONU is:
querying an allocation structure with its Alloc-ID equal to the ID of the ONU in all allocation structures in a downlink frame; and
setting a value of a ninth Bit of a Flag field in the queried allocation structure to be the instruction identifier of the FEC status of the ONU, of which the ID is equal to the Alloc-ID of the allocation structure, and transmitting the downlink frame.

3. The method according to claim 1, wherein the operation that the OLT transmits the instruction identifier of the FEC status of the ONU and the ID of the ONU is:
setting a PLOAM message which is taken as an FEC instruction message, adding an FEC instruction message identifier in the FEC instruction message, and adding the instruction identifier of the FEC status of the ONU and the ID of the ONU correspondingly in the FEC instruction message;
adding the FEC instruction message by the OLT in a PLOAM field of a downlink frame, and transmitting the downlink frame; or
adding the instruction identifier of the FEC status of the ONU and the ID of the ONU correspondingly in idle Bits in a PLOAM message, adding the PLOAM message in a PLOAM field of a downlink frame, and transmitting the downlink frame.

4. The method according to claim 1, wherein the operation that the OLT transmits the instruction identifier of the FEC status of the ONU and the ID of the ONU is:
adding an FEC status attribute of the ONU in an OMCI message;
setting a value of the FEC status attribute of the ONU in the OMCI message to be the instruction identifier of the FEC status of the ONU, adding the OMCI message in an OMCI field in a downlink frame, and transmitting the downlink frame.

5. The method according to claim 1, wherein the operation that the OLT transmits the instruction identifier of the FEC status of the ONU and the ID of the ONU is:
adding an FEC instruction field in a PCBd, mapping the ID of the ONU to a sequence number of a Bit of the FEC instruction field; and
adding the instruction identifier of the FEC status of the ONU by the OLT in a Bit with the sequence number equal to the ID of the ONU in the FEC instruction field, and broadcasting it.

6. The method according to any one of claims 1 to 5, further comprising: replying by the ONU to the OLT about a state of executing FEC instruction transmitted by the OLT, and the details are as follows:
carrying an instruction identifier of current FEC status in a first sent uplink frame by the ONU, after the FEC function is enabled or disabled; or
defining a reporting bit for the FEC status in a frame head of an uplink frame, when the uplink frame is transmitted, setting a value of the reporting bit for the FEC status in the uplink frame by the ONU to be the instruction identifier of the current FEC status of the ONU.

7. A system for instructing enabling/disabling FEC function, comprising an OLT and an ONU, wherein
the OLT is used for setting an instruction identifier of an FEC status, and transmitting an instruction identifier of FEC status of the ONU and an ID of the ONU, wherein the instruction identifier of the FEC status of the ONU is corresponding to the ID of the ONU; and
the ONU is used for enabling or disabling its own FEC function according to the received instruction identifier corresponding to its own ID.

8. The system according to claim 7, wherein the OLT comprises an identifier setting module, a status determining module and a transmission module, wherein
the identifier setting module is used for setting the instruction identifier of the FEC status;
the status determining module is used for determining the FEC status of the ONU; and
the transmission module is used for transmitting the instruction identifier of the FEC status of the ONU and the ID of the ONU, wherein the instruction identifier of the FEC status of the ONU is corresponding to the ID of the ONU.

9. The system according to claim 8, wherein the transmission module comprises a query module and a first setting module, wherein
the query module is used for querying an allocation structure with its Alloc-ID equal to the ID of the ONU in all allocation structures in a downlink frame; and
the first setting module is used for setting a value of a ninth Bit of a Flag field in the queried allocation structure to be the instruction identifier of the FEC status of the ONU, of which the ID is equal to the Alloc-ID of the allocation structure, and then transmitting the downlink frame.

10. The system according to claim 8, wherein the transmission module comprises a first adding module and a first transmission module, wherein
the first adding module is used for setting a PLOAM message which is taken as an FEC instruction message, adding an FEC instruction message identifier in the FEC instruction message, and adding the instruction identifier of the FEC status of the ONU and the ID of the ONU correspondingly, and then transmitting the FEC instruction message to the first transmission module; and
the first transmission module is used for adding the FEC instruction message transmitted by the first adding module in a PLOAM field in a downlink frame, and then transmitting the downlink frame.

11. The system according to claim 8, wherein the transmission module comprises a second adding module and a second transmission module, wherein
the second adding module is used for adding the instruction identifier of the FEC status of the ONU and the ID of the ONU correspondingly in idle Bits in a PLOAM message, and then transmitting the PLOAM message to the second transmission module; and
the second transmission module is used for adding the PLOAM message transmitted by the second adding module in a PLOAM field of a downlink frame, and transmitting the downlink frame.

12. The system according to claim 8, wherein the transmission module comprises an attribute setting module and a second setting module, wherein
the attribute setting module is used for adding an FEC status attribute of the ONU in an OMCI message; and
the second setting module is used for setting a value of the FEC status attribute of the ONU in the OMCI message to be the instruction identifier of the FEC status of the ONU, adding the OMCI message in an OMCI field in a downlink frame, and transmitting the downlink frame.

13. The system according to claim 8, wherein the transmission module comprises a field setting module and a third adding module, wherein
the field setting module is used for adding an FEC instruction field in a PCBd, and mapping the ID of the ONU to a sequence number of a Bit of the FEC instruction field; and
the third adding module is used for adding the instruction identifier of the FEC status of the ONU into the Bit with the sequence number equal to the ID of the ONU in the FEC instruction field, and broadcasting it.

14. The system according to any one of claims 7 to 13, wherein the ONU comprises:
an enabling/disabling module, used for enabling/disabling the FEC function of the ONU according to the received instruction identifier corresponding to the ID of the ONU;
the ONU further comprises:
an answering module, used for carrying an instruction identifier of current FEC status of the ONU in a first sent uplink frame after the FEC function is enabled or disabled, or defining a reporting bit for the FEC status in a frame head of an uplink frame and, when the uplink frame is transmitted, setting a value of the reporting bit for the FEC status in the uplink frame to be the instruction identifier of the current FEC status of the ONU.
